# EUROPEAN PATENT SPECIFICATION

(11) **EP 2 455 763 B1**
(45) Date of publication and mention of the grant of the patent: **17.10.2018**
(21) Application number: 10192169.0
(22) Date of filing: 23.11.2010
(51) Int. Cl.: G01N 35/04

(54) **Junction, device and process for transporting sample racks**
Verbindung, Vorrichtung und Verfahren zum Transportieren von Probenregalen
Jonction, dispositif et procédé de transport de portoirs d'échantillons

(43) Date of publication of application: 23.05.2012
(73) Proprietor: F. Hoffmann-La Roche AG, 4070 Basel (CH); Roche Diagnostics GmbH, 68305 Mannheim (DE)
(72) Inventor: Haechler, Joerg, CH-6317 Oberwil b. Zug (CH)
(74) Representative: Peterreins Schley

(56) References cited:
- JP-A- 9 033 539
- US-A- 5 087 423
- US-A- 6 080 364
- US-A1- 2008 069 730
- US-B1- 6 520 313

## Description

### TECHNICAL FIELD

The present invention is in the field of automated analytical sample processing and relates to a junction, device and process for transporting sample racks holding sample vessels in a system comprising one or more work cells for processing samples.

### BACKGROUND OF THE INVENTION

In these days, it is common practice to use automated instruments for analyzing samples with respect to various clinical-chemical and immunochemical analysis items. The instruments typically contain more than one work cell for performing processing steps which often are related to various kinds of analytical methods but may also be related to pre-analytical and/or post-analytical processing steps for preparing sample analysis and storing the samples, e.g., for further processing at a later stage.

In the course of automated sample processing, samples or aliquots thereof typically are transported from one work cell to another so that individual portions can be withdrawn and/or various fluids such as reagents, diluents and buffers can be added to the samples. In automated instruments, vessels containing the samples are usually transported via sample racks holding the vessels, wherein one rack holds either one vessel (single holder) or a plurality of vessels (multiple holder) serially arranged with respect to each other. In automated instruments, it is common practice to use a dedicated transporting device for transporting the sample racks between the various work cells. Accordingly, such transporting devices are well-known to those of skill in the art and in the patent literature, e.g. , are described in US-patent No. 6,202,829 B1 and European patent application No. 1460431 A2.

It would be convenient to use only one rack format (rack size) in the analytical instrument. However, different work cells may require different rack formats. Different rack formats may require complex reformatting operations in advance to their use which in most cases is time consuming and expensive. US Publication 2008/0069730 describes an automated analyzer station with two different types of transport lines for transporting two different types of sample carriers. It also contains turntables, but they are only suitable for transporting one type of sample carrier. The bypass lines are not for bypassing the turntables but for bypassing certain analytical stations.

It is an object of the invention to provide an efficient device for transporting sample racks of different formats between various work cells in an analytical instrument. This and further objects are met by a junction, transport device and process for transporting sample racks according to the independent claims. Preferred embodiments are given by the dependent claims.

### SUMMARY OF THE INVENTION

As used herein, the term "samples" includes liquid fluids or dry substances in which one or more analytes of interest can be present. In some embodiments, the samples are chemical fluids which can be subject to one or more chemical analyses and assays such as, but not limited to, drug interaction screening, environmental analysis and identification of organic substances. In some embodiments, the samples are biological fluids, e.g., body fluids such as, but not limited to, blood, serum, urine, saliva and cerebrospinal fluid, which can be subject to one or more analyses and assays in medical and pharmaceutical research and clinical diagnosis.
According to an aspect of the invention, a new junction for transporting sample racks in an analytical system comprising one or more work cells for processing samples is proposed. The junction comprises plural main transport lines for transporting first and second sample racks, wherein the first sample racks have a bigger rack size than the second sample racks with respect to a transporting direction of each of the main transport lines. In some embodiments, each of the first sample racks holds plural sample vessels, such as two, three, four, five or more than five sample vessels, while each of the second sample racks holds only one sample vessel.

The junction further comprises a turntable provided with at least one rotatable transport line for transporting the first and second sample racks. In the junction, the at least one rotatable transport line is coupled to the main transport lines so as to alternately connect the rotatable transport line to the main transport lines and/or to interconnect at least two main transport lines.

The junction further comprises one or more bypass transport lines, each of which interconnecting two main transport lines bypassing the turntable and being curved in a manner to enable transport of the second sample racks and disable transport of the first sample racks. Otherwise, each bypass transport line is associated with at least one controllable main/bypass line switch operable to guide the second sample racks from one main transport line to the bypass transport line or to keep the second sample racks on the main transport line. In some embodiments, the junction comprises one or more bypass transport lines which are arranged adjacent to the turntable. In some embodiments, each bypass transport line interconnects adjacent main transport lines.

Generally, each of the transport lines can be configured for transporting the samples racks in one transport direction (one-way) or in both transport directions (both-way).

In some embodiments, the junction comprises paired main transport lines, wherein each pair is configured for transporting the first and second sample racks in opposite transport directions, one main transport line being configured for transporting the sample racks in one transport direction, the other one being configured for transporting the sample racks in the other transport direction. In some embodiments, the main transport lines of each pair of main transport lines respectively are configured for transporting the sample racks in both transport directions.

In some embodiments, one or more pairs of the main transport lines respectively are interconnected by at least one interconnection transport line, wherein the interconnection transport line is associated with at least one controllable main/main line switch operable to guide the second sample racks from one main transport line to the interconnection transport line or to keep the first and second sample racks on one main transport line.

In some embodiments, the bypass and interconnection transport lines form a looped path of travel around the turntable.

In some embodiments, the turntable is provided with one pair of rotatable transport lines configured for transporting the first and second sample racks in opposite directions.

According to another aspect of the invention, a new automated transport device for transporting sample racks in an analytical system comprising one or more work cells for processing samples is proposed. The transport device includes one or more junctions as above-detailed. It further includes a controller, set up to control transporting the sample racks between two main transport lines of one junction in a manner that
- the rotatable transport line is rotated to interconnect the main transport lines, wherein the first and second sample racks are transported by the rotatable transport line; or
- the rotatable transport line is rotated to be alternately
connected to the main transport lines, wherein the first sample racks are transported by the rotatable transport line and the second sample racks are transported by the bypass transport line interconnecting the main transport lines.

In some embodiments of the transport device, comprising paired main transport lines, each pair being configured for transporting the sample racks in opposite directions, the controller is set up to control transporting the sample racks between the main transport lines of one pair of main transport lines by transporting the sample racks from one main transport line to the rotatable transport line, rotating the at least one rotatable transport line to connect it to the other main transport line and transporting the sample racks to the other main transport line.

In some embodiments of the transport device, one or more pairs of the main transport lines respectively are interconnected by at least one interconnection transport line, the interconnection transport line being associated with at least one controllable main/main line switch operable to guide the second sample racks from one main transport line to the interconnection transport line so as to transport the second sample racks to another main transport line of the pair of main transport lines or to keep the first and second sample racks on one main transport line. Furthermore, the controller is set up to control transporting the second sample racks between the main transport lines of one pair of main transport lines by transporting the second sample racks by the interconnection line.

In some embodiments of the transport device, one or more of the switches respectively are operatively coupled to a rack size sensor configured for sensing the rack sizes. Furthermore, the controller is set up to control transporting the first and second sample racks in a manner that the rack size is determined by the rack size sensor so as to obtain rack size-specific sensor signals and the switches are operated based on the rack-size specific sensor signals.

According to a yet another aspect of the invention, a new analytical system comprising one or more work cells for processing samples is proposed. The work cells can be related to analytical and, optionally, to pre-analytical and/or post-analytical sample processing steps. Furthermore, the system comprises an automated transport device as above-detailed.

In some embodiments of the system, the work cells comprise first and/or second work cells, wherein each of the first work cells is associated with one auxiliary transport line connected to one main transport line for processing samples transported by the auxiliary transport line, and wherein each of the second work cells is associated with at least one main transport line for processing samples transported by the main transport line. In some embodiments, the each of the first work cells is in parallel alignment with one auxiliary transport line.

According to a yet another aspect of the invention, a new process for transporting first and second sample racks in an automated analytical system comprising one or more work cells for processing samples is proposed. The first sample racks have a bigger rack size than the second sample racks with respect to a transporting direction. The process comprises the following steps of:
- transporting the first sample racks from one main transport line to another main transport line by rotating at least one rotatable transport line in a manner to alternately connect it to the main transport lines;
- transporting the second sample racks from the one main transport line to the other main transport line by means of a bypass transport line, wherein the bypass transport line interconnects the main transport lines bypassing the rotatable transport line and is curved in a manner to enable transport of the second sample racks and disable transport of the first sample racks.

In some embodiments of the process, the first and second sample racks are transported from one main transport line to another main transport line, wherein the main transport lines are configured for transporting the sample racks in opposite directions, by rotating the at least one rotatable transport line and transporting the sample racks by the rotatable transport line. Stated more particularly, the sample racks are transported from one main transport line to the rotatable transport line, the at least one rotatable transport line is rotated to connect it to the other main transport line and the sample racks are transported to the other main transport line.

The above-described embodiments of the various aspects of the invention may be used alone or in any combination thereof without departing from the scope of the invention.

### BRIEF DESCRIPTION OF THE DRAWINGS

Other and further objects, features and advantages of the invention will appear more fully from the following description. The accompanying drawings, which are incorporated in and constitute a part of the specification, illustrate preferred embodiments of the invention, and together with the general description given above and the detailed description given below, serve to explain the principles of the invention.
- FIG. 1: is a schematic top view illustrating an exemplary embodiment of a system for processing samples according to the invention;
- FIG. 2: is a schematic top view illustrating a junction of the system of FIG. 1;
- FIGS. 3-5: are schematic top views illustrating various exemplary scenarios for transporting sample racks using the junction of FIG. 2;
- FIG. 6: is a schematic top view illustrating a first work cell of the system of FIG. 1;
- FIG. 7: is a schematic top view illustrating a second work cell of the system of FIG. 1.

### DETAILED DESCRIPTION OF THE INVENTION

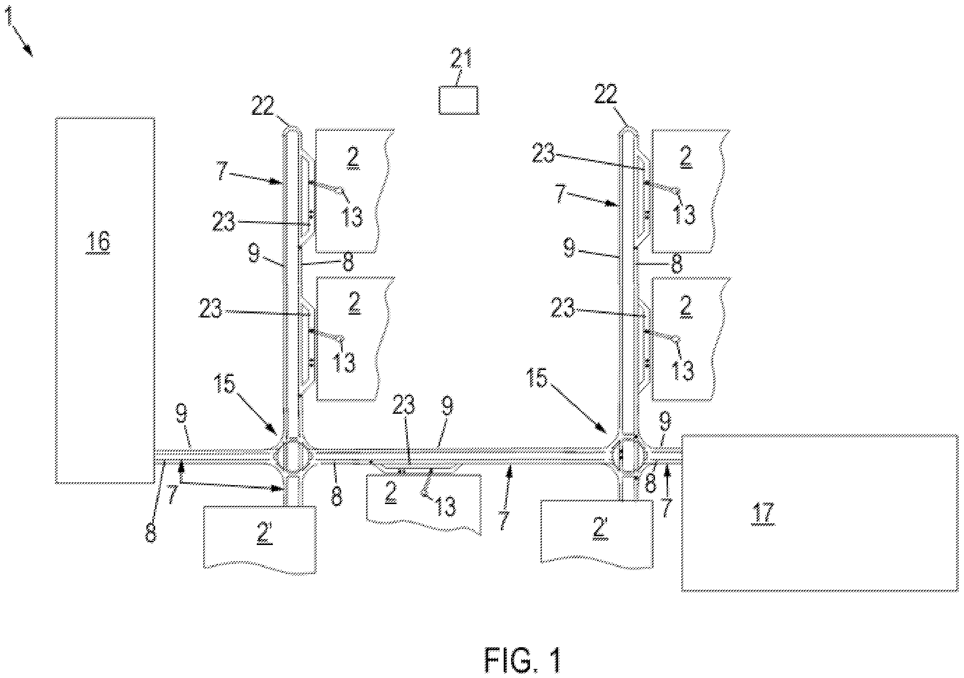

The present invention will be described in detail below with reference to the accompanying drawings. With particular reference to FIG. 1, an exemplary embodiment of a system, generally referred to at reference numeral 1, comprising plural work cells for processing samples is explained.

As illustrated, in some embodiments, the system 1 comprises plural analytical work cells 2, 2' which can be related to one or more kinds of various analytical methods for analysing samples, one pre-analytical work cell 16 for performing one or more pre-analytical sample processing steps and one post-analytical work cell 17 for performing one or more post-analytical sample processing steps such as sample storing for later further processing.

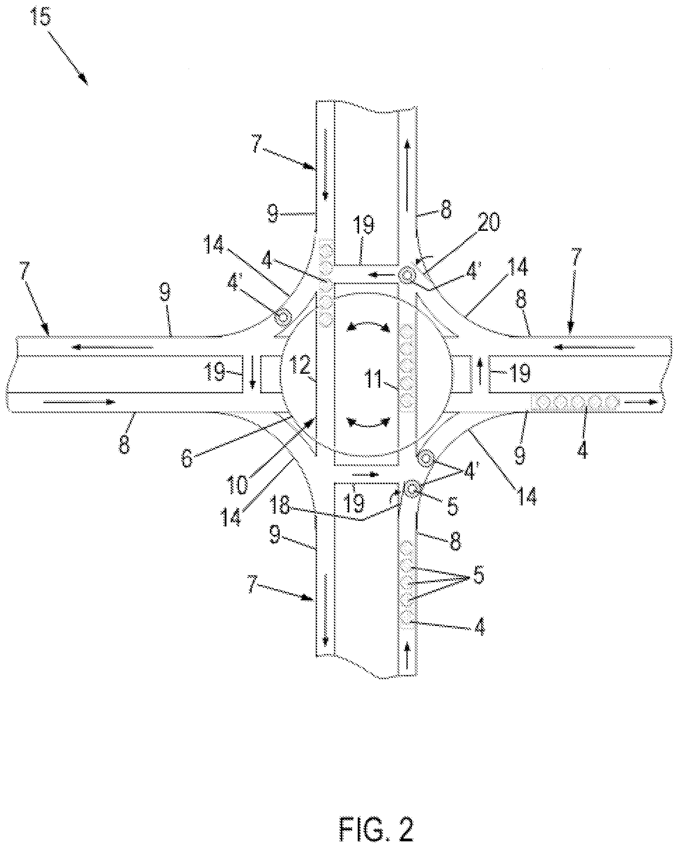

With reference to FIGS. 1 and 2, in some embodiments, the system 1 includes a transport device 3 comprising plural main transport lines 8, 9 for transporting sample racks 4, 4' having a different rack format in a generally horizontal plane. Specifically, the transport device 3 is configured to transport both first and second sample racks 4, 4', the first sample racks 4 being of a first rack type having a bigger rack size with respect to transport directions of the main transport lines 8, 9 than the second sample racks 4' being of a second rack type and thus having a smaller rack size than the first sample racks 4. Each of the sample racks 4, 4' is provided with one or more sample vessels 5. Specifically, due to the larger rack size, each of the first sample racks 4 can hold a larger number of sample vessels 5 than the second sample racks 4'. As illustrated in FIG. 2, in some embodiments, each of the first sample racks 4 holds plural sample vessels 5 such as, but not limited to, five sample vessels 5 while each of the second sample racks 4' holds only one sample vessel 5.

As illustrated, in some embodiments, the transport device 3 includes plural junctions 15, such as, but not limited to, a number of two junctions 15 for transporting the sample racks 4, 4' between various main transport lines 8, 9. Specifically, FIG. 2 illustrates an enlarged view of one junction 15 of the system 1 of FIG. 1. With continued reference to FIGS. 1 and 2, each junction 15 comprises plural main transport lines 8, 9 for transporting first and second sample racks 4, 4', each of which defining a straight path of travel which permits sample racks 4, 4' to move from one point to another without retracing any point of travel when the main transport line 8, 9 is moving in one direction. As illustrated, in some embodiments, the main transport lines 8, 9 are paired parallel transport lines, wherein each pair 7 of main transport lines 8, 9 is configured for transporting the first and second sample racks 4, 4' in opposite transport directions. Specifically, in each pair 7 of main transport lines 8, 9, one main transport line can be configured for transporting the first and second sample racks 4, 4' in one transport direction (one-way) while the other main transport line is configured for transporting the first and second sample racks 4, 4' in the other transport direction (one-way) opposite thereto. Otherwise, each main transport line 8, 9 can be configured for transporting the first and second sample racks 4, 4' in opposite transport directions (both-way).

With continued reference to FIGS. 1 and 2, each junction 15 comprises one turntable 6 provided with one pair 10 of rotatable transport lines 11, 12 for transporting the first and second sample racks 4, 4' in opposite directions. Specifically, in the pair 10 of rotatable transport lines 11, 12, one rotatable transport line can be configured for transporting the first and second sample racks 4, 4' in one transport direction (one-way) while the other rotatable transport line is configured for transporting the first and second sample racks 4, 4' in the other transport direction (one-way) opposite thereto. Otherwise, each rotatable transport line 11, 12 can be configured for transporting the first and second sample racks 4, 4' in opposite transport directions (both-way).

As illustrated, the rotatable transport lines 11, 12 are coupled to plural pairs 7 of main transport lines 8, 9, such as, but not limited to, a number of four pairs 7 of main transport lines 8, 9. In some embodiments, neighbouring pairs 7 of main transport lines 8, 9 coupled to one turntable 6 are orthogonally arranged with respect to each other. Specifically, in some embodiments, the junction 15 includes a first couple of two opposing pairs 7 of main transport lines 8, 9 and a second couple of two opposing pairs 7 of main transport lines 8, 9 inclined to the first one in an angle of 90°. It, however, is indicated that the pairs 7 of main transport lines 8, 9 can have any orientations other than those illustrated in FIG. 1 and 2. Specifically, in some embodiments, the junction 15 includes a first couple of two opposing pairs 7 of main transport lines 8, 9 and a second couple of two opposing pairs 7 of main transport lines 8, 9 inclined to the first one in an angle other than 90°.

Each pair 7 of main transport lines 8, 9 coupled to one turntable 6 can be identified as common transport path for transporting first and second sample racks 4, 4' towards and away from the turntable 6. Specifically, in some embodiments, in each junction 15, a first main transport line 8 of one pair 7 of main transport lines 8, 9 can be operated to transport first and second sample racks 4, 4' towards the turntable 6 while a second main transport line 9 thereof can be operated to transport first and second sample racks 4, 4' away from the turntable 6. Otherwise, in some embodiments, a first rotatable line 11 of the pair 10 of rotatable transport lines 11, 12 can be operated to transport first and second sample racks 4, 4' in a same direction as the first main transport line 8 of the pair 7 of main transport lines 8, 9 to which it is coupled while the second rotatable transport line 12 thereof can be operated to transport sample racks 4, 4' in a same direction as the second main transport line 9 thereof.

In the turntable 6, for each pair 7 of main transport lines 8, 9, the pair 10 of rotatable transport lines 11, 12 can be rotated to connect the first rotatable line 11 to the first main transport line 8 of one pair 7 of main transport lines 8, 9 while the second rotatable line 12 is connected to the second main transport line 9 thereof. As illustrated, in some embodiments, due to the first couple of two opposing pairs 7 of main transport lines 8, 9 and the second couple of two opposing pairs 7 of main transport lines 8, 9, for each couple of two opposing pairs 7 of main transport lines 8, 9, the pair 10 of rotatable transport lines 11, 12 can be rotated to interconnect the first main transport lines 8 and the second main transport lines 9, respectively.

Otherwise, the pair 10 of rotatable lines 11, 12 can be rotated to connect the first rotatable line 11 to the first main transport line 8 of one pair 7 of main transport lines 8, 9 while the second rotatable line 12 is connected to the second main transport line 9 thereof, and, can then be rotated by 180° to connect the first rotatable line 11 to the second main transport line 8 of the same pair 7 of main transport lines 8, 9 while the second rotatable line 12 is connected to the first main transport line 9 thereof. As further illustrated in FIG. 1, in some embodiments, while the one ends of the first and second main transport lines 8, 9 of one pair 7 of main transport lines 8, 9 are coupled to one turntable 6, the other ends thereof can be connected by a curved line portion 22 allowing the second sample racks 4' to be conveyed in opposite directions by transporting one-way. In some other embodiments, the other ends of the first and second main transport lines 8, 9 of one pair 7 of main transport lines 8, 9 are connected by a turntable (not illustrated) allowing both the first and second sample racks 4, 4' to be conveyed in opposite directions by transporting one-way.

With yet continued reference to FIGS. 1 and 2, in some embodiments, the junction 15 comprises plural bypass transport lines 14 such as, but not limited to, a number of four bypass transport lines 14, each of which being arranged adjacent to the turntable 6. As further illustrated, in some embodiments, each bypass transport line 14 is connected to two adjacent pairs 7 of main transport lines 8, 9 coupled to one turntable 6. As further illustrated, in some embodiments, each bypass transport line 14 interconnects the first main transport line 8 of one pair 7 of main transport lines 8, 9 with the second main transport line 9 of an adjacent pair 7 of main transport lines 8, 9. In each junction 15, each bypass transport line 14 is curved in a manner that exclusively the smaller sized second sample racks 4' can be transported thus disabling transport of the bigger sized first sample racks 4. Hence, due to the strongly curved bypass transport lines 14, the junction 15 can advantageously have comparably small dimensions thereby reducing the overall dimensions of the transport device 3. Accordingly, in the junction 15, each bypass transport line 14 can be operated to transport the second sample racks 4' from the first main transport line 8 of one pair 7 of main transport lines 8, 9 to the second main transport line 9 of an adjacent pair 7 of main transport lines 8, 9.

With continued reference to FIG. 2, in some embodiments, each bypass transport line 14 is operatively coupled to one controllable main/bypass line switch 18 operable to guide the second sample racks 4' from the first main transport line 8 of the one pair 7 of main transport lines 8, 9 to the bypass transport line 14 connected thereto or to keep the second sample racks 4' on the first main transport line 8 for transport towards the turntable 6. While not shown in the figures, in some embodiments, the controllable main/bypass line switch 18 is operatively coupled to a rack size sensor configured for sensing the rack sizes so as to obtain rack size-specific sensor signals. Control of the main/bypass line switch 18 can be based on the rack size-specific sensor signals.

With yet continued reference to FIGS. 1 and 2, in some embodiments, the first and second main transport lines 8, 9 of one pair 7 of main transport lines 8, 9 are interconnected by one interconnection line 19 arranged adjacent to the turntable 6 and being configured for transporting the second sample racks 4' . As illustrated in FIG. 2, in some embodiments, each interconnection line 19 is operatively coupled to one controllable main/main line switch 20 operable to guide the second sample racks 4' from one main transport line 8, 9 to the interconnection line 19 or to keep the first and second sample racks 4, 4' on the main transport line 8, 9. While not shown in the figures, in some embodiments, the controllable main/main line switch 20 is operatively coupled to a rack size sensor configured for sensing the rack sizes so as to obtain rack size-specific sensor signals. Control of the main/main line switch 20 can be based on the rack size-specific sensor signals.

With yet continued reference to FIGS. 1 and 2, in some embodiments, the first and second main transport lines 8, 9 of adjacent pairs 7 of main transport lines 8, 9 which are interconnected by the bypass transport lines 14, together with the interconnection lines 19 respectively interconnecting the first and second main transport lines 8, 9 of one pair 7 of main transport lines 8, 9, commonly define a looped path of travel around the turntable 6. Accordingly, the second sample racks 4' can be transported on a looped travel path around the turntable 6 permitting the second sample racks 4' to repeat the path of travel as often as needed when moving in one-way.

With yet continued reference to FIG. 1, in some embodiments, the transport device 3 is provided with one or more auxiliary transport lines 23, each of which being connected and provided in parallel alignment to one main transport line 8, 9 configured for transporting the second sample racks 4' in one-way. As illustrated in FIG. 1, in some embodiments, each auxiliary transport line 23 is connected to the second main transport line 9 of one pair 7 of main transport lines 8, 9 so that second sample racks 4' are transported away from the turntable 6 by the auxiliary transport line 23. Specifically, in some embodiments, each auxiliary transport line 23 is operatively coupled to one controllable main/auxiliary line switch (not illustrated) operable to guide second sample racks 4' from the second main transport line 9 to the auxiliary transport line 23 or to keep the second sample racks 4' on the second main transport line 9. From the auxiliary transport line 23, second sample racks 4' are transported back to the second main transport line 9.

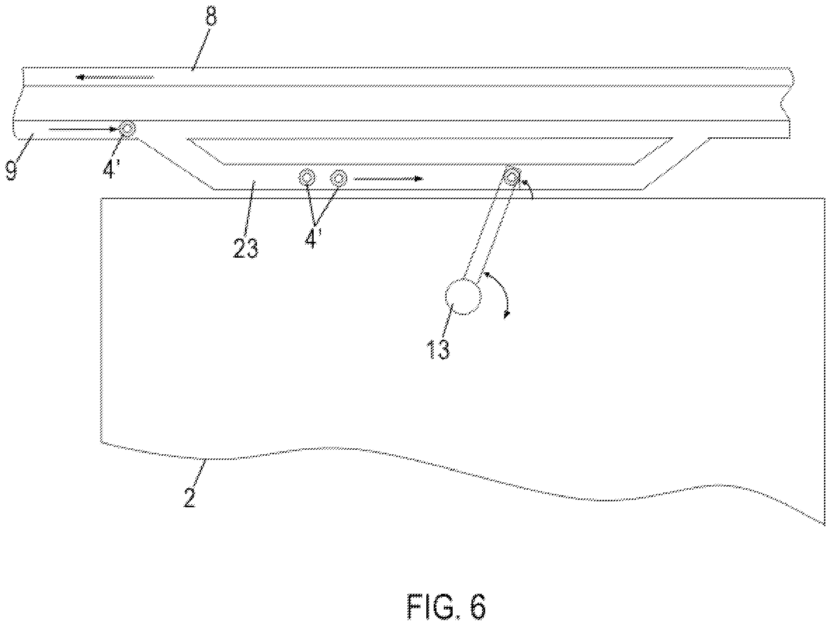

With continued reference to FIG. 1 and specific reference to FIG. 6, in some embodiments, each auxiliary transport line 23 is associated with one or more first work cells 2 such as, but not limited to, one work cell 2. Specifically, in some embodiments, the first work cells 2 are related to processing steps configured for analyzing samples contained in the second sample racks 4', wherein each first work cell 2 can be used for processing the samples simultaneously with transporting the second sample racks 4' by the auxiliary transport line 23 associated therewith. As illustrated, in some embodiments, each first work cell 2 can be configured to perform sample processing operations such as, but not limited to, pipetting operations by means of a pipetting device 13 adapted for withdrawing sample portions, e.g., for analysis thereof, and/or adding fluidic substances to the samples such as diluents, buffers or any other substance according to the specific demands of the user. When transported by the auxiliary transport line 23, in some embodiments, second sample racks 4' can have a transport speed smaller than a transport speed when transported by the second main transport line 9 connected thereto. In some embodiments, second samples racks 4' conveyed by the auxiliary transport line 23 can also be stopped for a predetermined time interval for performing sample processing operations. While not illustrated, in some embodiments, the first work cells 2 are related to processing steps configured for analyzing samples contained in either the first or the second sample racks 4, 4'. Accordingly, the auxiliary transport lines 23 can be configured for transporting both the first and second sample racks 4, 4' in one-way and the controllable main/auxiliary line switches (not illustrated) can be operable to guide the first and second sample racks 4, 4' from the second main transport line 9 to the auxiliary transport line 23 or to keep the first and second sample racks 4, 4' on the second main transport line 9.

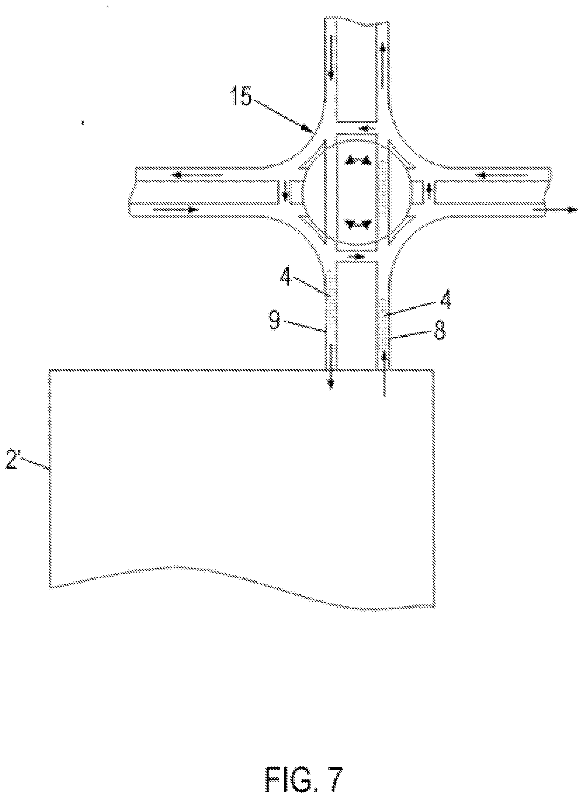

With continued reference to FIG. 1 and specific reference to FIG. 7, in some embodiments, the first and second main lines 8, 9 of one or more pairs 7 of main transport lines 8, 9 are associated with second work cells 2' . Specifically, in some embodiments, the second work cells 2' are related to processing steps configured for analyzing the samples transported by the first sample racks 4, wherein each second work cell 2 can be used for processing the samples simultaneously with transporting the first sample racks 4 containing the samples by the pair 7 of main transport lines 8, 9 associated therewith. Specifically, as illustrated, in some embodiments, one pair 7 of main transport lines 8, 9 can be associated with one second work cell 2' wherein the first and second main transport lines 8, 9 thereof are directed into the second work cell 2' so that first sample racks 4, 4' can be transported in and out the second work cell 2'. While not illustrated, in some embodiments, the first work cells 2 are related to processing steps configured for analyzing samples contained in either the first or the second sample racks 4, 4'.

In the system 1, the transport device 3 can be driven by one or more driving means such as, but not limited to, a belt drive. In some embodiments, individual transport lines are driven by a separate driving means. In some embodiments, one or more transport lines are driven by a same driving means. In some embodiments, each rotatable transport line can be rotated by one rotating means such as, but not limited to, an electrically driven rotor.

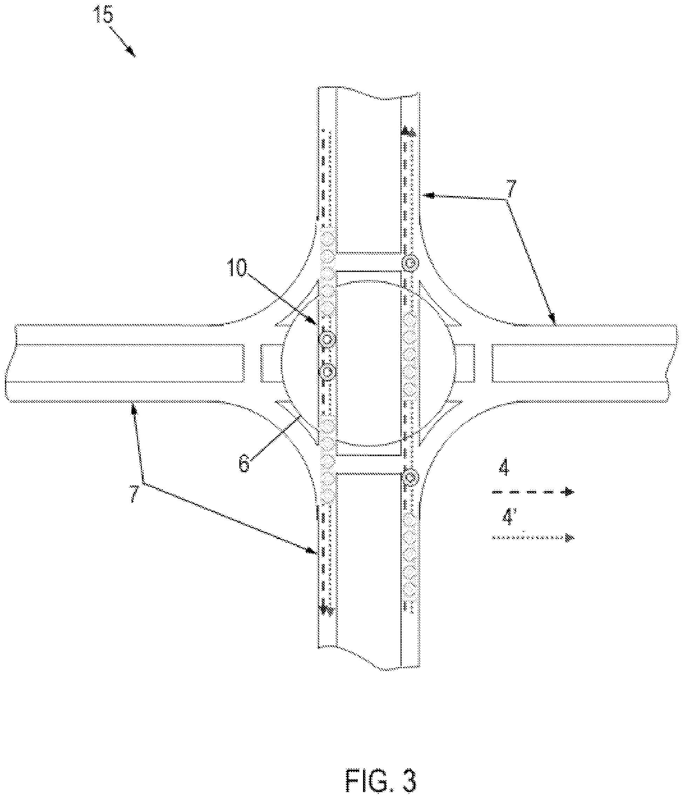

The system 1 further comprises a controller 21 set up to control sample processing by the various work cells 2, 2', 16, 17 involving transport of the sample racks 4, 4' by the transport device 3. The controller 21 can, e.g., be embodied as programmable logic controller running a computer-readable program electrically connected to the system components which require control and/or provide information which include the work cells 2, 2', 16, 17 and the transport device 3 including the various transport lines and switches. Specifically, in some embodiments, the controller 21 is set up to control the various scenarios for transporting first and second sample racks 4, 4' by one junction 15 as schematically illustrated in FIGS. 3 to 5.

Reference is first made to FIG. 3, illustrating a first scenario for transporting first and second sample racks 4, 4' by one junction 15 of the system 1. In this scenario, the first and second sample racks 4, 4' are to be transported from the lower pair 7 of main transport lines 8, 9 to the upper pair 7 of main transport lines 8, 9. Accordingly, the pair 10 of rotatable transport lines 11, 12 is rotated to interconnect the first and second main transport lines 8, 9 of the opposing pairs 7 of main transport lines 8, 9 by the first and second rotatable transport lines 11, 12, respectively. The first and second sample racks 4, 4' can then be transported passing the turntable 6 in a straight path of travel as illustrated by the dotted and dashed arrows. Accordingly, when the turntable 6 has been brought in a rotational position to interconnect the two opposing pairs 7 of main transport lines 8, 9, it is not required to further rotate the turntable 6 to transport the first and second sample racks 4, 4' from the one pair 7 of main transport lines 8, 9 to the other pair 7 of main transport lines 8, 9.

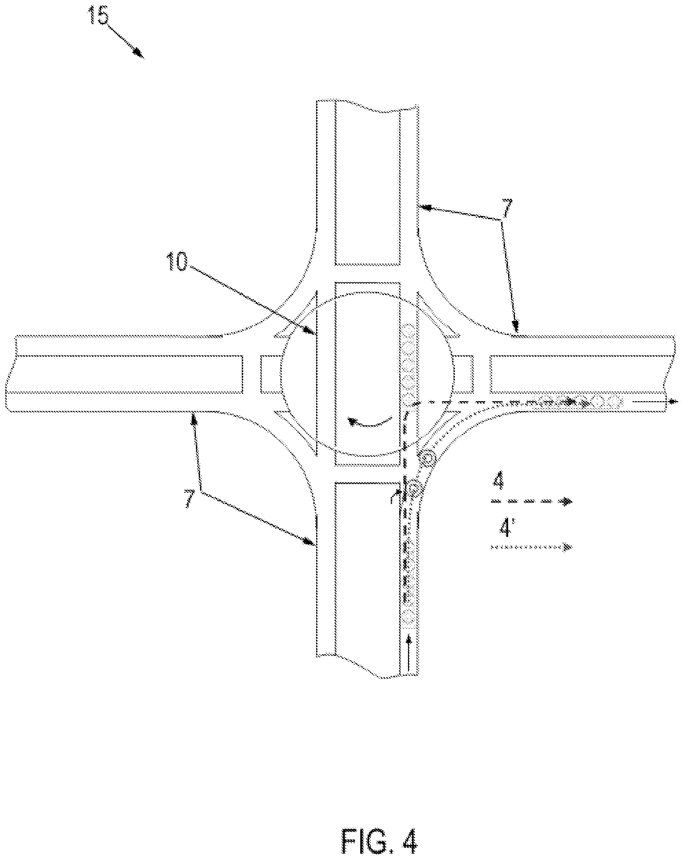

Reference is made to FIG. 4, illustrating a second scenario for transporting first and second sample racks 4, 4' by one junction 15 of the system 1. In this scenario, the first and second sample racks 4, 4' are to be transported from the lower pair 7 of main transport lines 8, 9 to the adjacent right pair 7 of main transport lines 8, 9 thereby changing the transport direction of the sample racks 4, 4' to the right. Accordingly, the turntable 6 is to be rotated to alternately connect to the first and second main transport lines 8, 9 of the two pairs 7 thereof. Stated more particularly, the turntable 6 is rotated in a rotational position where the first and second rotatable transport lines 11, 12 are connected to the first and second main transport lines 8, 9 of the lower pair 7 of main transport lines 8, 9. One or more first sample racks 4 then are transported from the first main transport lines 8 to the first rotatable transport line 11 and stopped on the turntable 6. As illustrated, the turntable 6 is then rotated in another rotational position by 90° to the right where the first and second rotatable transport lines 11, 12 are connected to the first and second main transport lines 8, 9 of the right pair 7 of main transport lines 8, 9. The one or more first sample racks 4 then are transported from the first rotatable transport line 11 to the first main transport line 8 of the right pair 7 of main transport lines 8, 9. The transport of the first sample racks 4 is indicated by the dashed arrow. Otherwise, the second sample racks 4', instead of being transported by the turntable 6, are transported via the bypass transport line 14 interconnecting the lower and the right main transport lines 8 as indicated by the dotted arrow. Hence, the turntable 6 is rotated for transporting the first sample racks 4 from one main transport line 8 to the other main transport line 8, while the second sample racks 4' are transported via the bypass transport line 14.

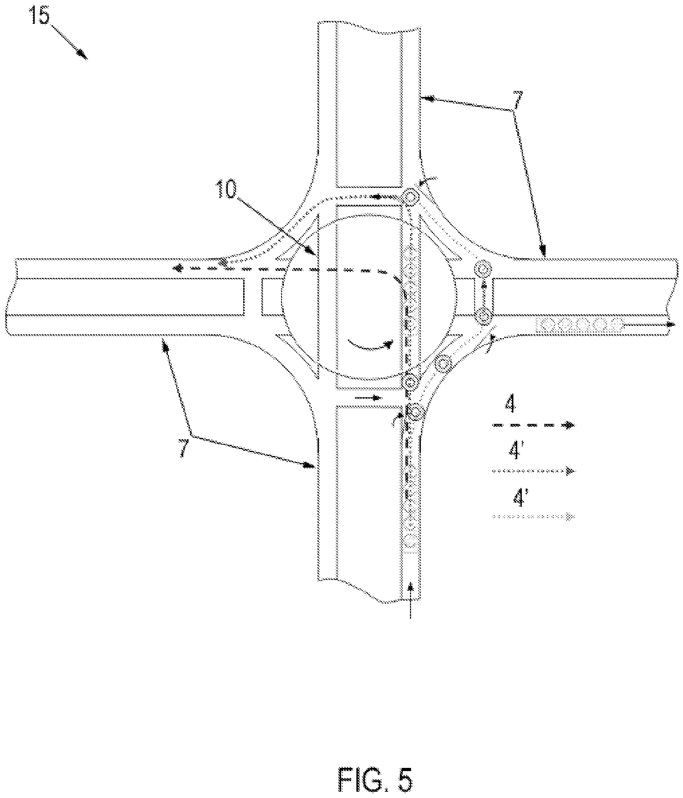

Reference is made to FIG. 5, illustrating a third scenario for transporting first and second sample racks 4, 4' by one junction 15 of the system 1. In this scenario, the first and second sample racks 4, 4' are to be transported from the lower pair 7 of main transport lines 8, 9 to the adjacent left pair 7 of main transport lines 8, 9 thereby changing transport direction of the sample racks 4, 4' to the left. Accordingly, the turntable 6 is to be rotated to alternately connect to the first and second main transport lines 8, 9 of the two pairs 7 thereof. Stated more particularly, the turntable 6 is rotated in a rotational position where the first and second rotatable transport lines 11, 12 are connected to the first and second main transport lines 8, 9 of the lower pair 7 of main transport lines 8, 9. One or more first sample racks 4 then are transported from the first main transport lines 8 to the first rotatable transport line 11 and stopped on the turntable 6. As illustrated, the turntable 6 is then rotated in another rotational position by 90° to the left where the first and second rotatable transport lines 11, 12 are connected to the first and second main transport lines 8, 9 of the left pair 7 of main transport lines 8, 9. The one or more first sample racks 4 then are transported from the first rotatable transport line 11 to the first main transport line 8 of the left pair 7 of main transport lines 8, 9. The transport of the first sample racks 4 is indicated by the dashed arrow. Otherwise, for transport of the second sample racks 4', the turntable 6 is rotated in a rotational position where the first and second rotational transport lines 11, 12 interconnect the first and second main transport lines 8, 9 of the opposing upper and lower pair 7 of main transport lines 8, 9. The second sample racks 4' can then be transported from the first main transport line 8 of the lower pair 7 of main transport lines 8, 9 to the second main transport line 9 of the upper pair 7 of main transport lines 8, 9 passing the turntable 6 in a straight path of travel. The second sample racks 4' can then be transported from the second main transport line 9 via the interconnection transport line 19 to the first main transport line 8 of the upper pair 7 of main transport lines 8, 9. Then, the second sample racks 4' can be transported from the first main transport line 8 of the upper pair 7 of main transport lines 8, 9 to second main transport line 9 of the left pair 7 of main transport lines 8, 9 via the bypass transport line 14 interconnecting the first main transport line 8 of the upper pair 7 of main transport lines 8, 9 and the second main transport line 9 of the left pair 7 of main transport lines 8, 9, as illustrated by the dotted arrow. Alternatively, instead of being transported via the turntable 6, the second sample racks 4' can also be transported using a combined path of travel consisting of the bypass transport line 14 interconnecting the first main transport line 8 of the lower pair 7 of main transport lines 8, 9 and the second main transport line 9 of the right pair 7 of main transport lines 8, 9, the interconnection transport line 19 of the right pair 7 of main transport lines 8, 9, the bypass transport line 14 interconnecting the first main transport line 8 of the right pair 7 of main transport lines 8, 9 and the second main transport line 9 of the upper pair 7 of main transport lines 8, 9, the interconnection transport line 19 of the upper pair 7 of main transport lines 8, 9,and the bypass transport line 14 interconnecting the first main transport line 8 of the upper pair 7 of main transport lines 8, 9 and the second main transport line 9 of the left pair 7 of main transport lines 8, 9, as indicated by the other dotted arrow.

While not shown in the figures, in another scenario for transporting first and second sample racks 4, 4' by one junction 15 of the system 1, the first and second sample racks 4, 4' can be transported from the first transport line 8 of one pair 7 of main transport lines 8, 9 to the second main transport line 9 of the same pair 7 of main transport lines 8, 9 in the following way: The turntable 6 is rotated to connect the first and second rotatable transport lines 11, 12 to the first and second main transport lines 8, 9, respectively, of the pair 7 of main transport lines 8, 9. One or more first and/or second sample racks 4, 4' then are transported from the first main transport line 8 thereof to the first rotatable transport line 11 and stopped on the turntable 6. The turntable 6 then is rotated in another rotational position by 180° where the first rotatable transport line 11 is connected to the second main transport line 9 of the same pair 7 of main transport lines 8, 9 while the second rotatable transport line 12 is connected to the first main transport line 8 thereof. The first and/or second sample racks 4, 4' then are transported from the first rotatable transport line 11 to the second main transport line 9 of the pair 7 of main transport lines 8, 9.

As above-described, the analytical system 1 includes a flexible transport device 3 for the transport of sample racks 4, 4' having different rack formats, e.g., embodied as single holders (one-vessel racks) and multiple holders (multi-vessel racks) between the various pre-analytical, analytical and post-analytical work cells 2, 2', 16, 17. Due to the bypass transport lines 14, the junctions 15 can be used for a highly efficient transport of sample racks 4, 4' of both rack formats. Specifically, when travelling along a straight path of travel, sample racks 4, 4' of both rack formats can be transported on the same main transport line 8, 9. In case sample racks 4, 4' have to change transport direction to the same side where the first main transport line 8 is, by use of the junction 15, the first sample racks 4 are transported via the turntable 6 and the second sample racks 4' are transported via the bypass transport line 14 interconnecting the first and second main transport lines 8, 9 of the adjacent pair 7 of main transport lines 8, 9 involved. Accordingly, the second sample racks 4' are diverted before reaching the turntable 6 and can change direction via the curved bypass transport line 14 which unifies with the second main transport line 9 coming from the turntable 6. When entering the second main transport line 9, either the first or second sample racks 4, 4' can be hold back to avoid sample rack collision. Transfer of the second sample racks 4' via the bypass transport line 14 is much more efficient than via the turntable 6, in particular, in case one second sample rack 4' is following a first sample rack 4 and itself is followed by a first sample rack 4 so that the turntable 6 would have to be operated to transport individual second sample racks 4' . In case sample racks 4, 4' have to change direction to the side other than where the first main transport line 8 is, by use of the junction 17, the first sample racks 4 are transported via the turntable 6 and the second sample racks 4' pass the turntable 6 in a straight path of travel, and then are pushed to the interconnection transport line 19 of the other pair 7 of main transport lines 8, 9 and the bypass transport line 14 which unifies with the second main transport line 9 coming from the turntable 6. Alternatively, in case the turntable 6 is occupied, the second sample racks 4' can be transported around the turntable 6 instead of waiting until it is free.

In the system 1, when sample racks 4, 4' approach a junction 15 by a first main transport line 8, in some embodiments, an identity of sample racks 4, 4' is read by means of a reader such as, but not limited to, an RFID-reader so as to control transport of the second sample racks 4' to be transported passing the turntable 6 in a straight line of travel or via one or more bypass transport lines 14 bypassing the turntable 6.

In the system 1, the second sample racks 4' can be transported to the auxiliary transport lines 23 for analysis by the first work cells 2. The first work cells 2 can, e.g., be related to a "pick-in-space" method for pipetting samples contained in the second sample racks 4' . Before being transported to the pipetting position, in some embodiments, an identity of the second sample racks 4' is read by means of a reader such as, but not limited to, an RFID-reader so as to control pipetting of the samples contained. In pipetting position, in some embodiments, specific mechanical positioning means make sure that the second sample racks 4' are appropriately positioned so as to enable precise pipetting operations. When being configured for processing samples contained in first sample racks 4, in some embodiments, the first sample racks 4 holding plural sample vessels 5 can be moved stepwise through the pipetting position so that pipetting at every sample position in the first sample rack 4 can be performed.

In the system 1, a process flow controlled by the controller 21 involving pre-analytical, analytical and post-analytical sample processing steps can be based on various parameters such as, but not limited to, assigned test requests, information about the vessel type, system status information and the like. Specifically, in some embodiments, in the pre-analytical work cell 16 samples are processed by conventional processing operations such as centrifugation, de-capping, aliquoting and the like and then, after finishing pre-analytical processing steps, are placed in vessels 5 of the first and second sample racks 4, 4' . In some embodiments, the sample racks 4, 4' then are transported to one or more of the analytical work cells 2, 2' by the bi-directional transport device 3 comprising plural pairs 7 of two parallel main transport lines 8, 9 having opposite running directions. In some embodiments, as illustrated, the transport device 3 is implemented as right-hand traffic system. After analysing the samples, in some embodiments, the sample racks 4, 4' are transported to the post-analytical work cells 17, e.g., for storing the samples for further processing or discharging.

In the system 1, the junctions 15 advantageously allow for a highly efficient change of transport direction of both first and second sample racks 4, 4' with minimal space requirements. Accordingly, the system 1 enables time-efficient transport of the first and second sample racks 4, 4'. Another advantage is given by the fact that the system 1 can handle sample racks 4, 4' having different rack sizes without having to reformat settings of the system 1 to adapt to the different rack sizes. Accordingly, costs, time and space for reformatting the system 1 can be avoided. Otherwise, the system 1 can make use of the high flexibility provided when samples are transported in small-sized sample racks 4' such single holders and, at the same time, provides an efficient way for transporting bigger-sized sample racks 4 which can be targeted for specific work cells.

Obviously many modifications and variations of the present invention are possible in light of the above description. It is therefore to be understood, that within the scope of the appended claims, the invention may be practiced otherwise than as specifically devised.

### Reference list

- 1: System
- 2, 2': Analytical work cell
- 3: Transport device
- 4, 4': Sample rack
- 5: Sample vessel
- 6: Turntable
- 7: Pair of main transport lines
- 8: First main transport line
- 9: Second main transport line
- 10: Pair of rotatable lines
- 11: First rotatable transport line
- 12: Second rotatable transport line
- 13: Pipetting device
- 14: Bypass transport line
- 15: Junction
- 16: Pre-analytical work cell
- 17: Post-analytical work cell
- 18: Main/bypass line switch
- 19: Interconnection transport line
- 20: Main/main line switch
- 21: Controller
- 22: Curved line portion
- 23: Auxiliary transport line

## Claims

1. A junction (15) for transporting sample racks (4, 4') in an analytical system (1) comprising one or more work cells (2, 2') for processing samples, comprising:
- plural main transport lines (8, 9) for transporting first and second sample racks (4, 4'), wherein said first sample racks (4) have a bigger rack size than said second sample racks (4') with respect to transporting directions of said main transport lines (8, 9);
- a turntable (6) provided with at least one rotatable transport line (11, 12) for transporting said first and second sample racks (4, 4'), said rotatable transport line (11, 12) being coupled to said main transport lines (8, 9) in a manner to alternately connect said rotatable transport line (11, 12) to said main transport lines (8, 9) and/or to interconnect at least two main transport lines (8, 9);
- one or more bypass transport lines (14), each of which interconnecting two main transport lines (8, 9) bypassing said turntable (6) and being curved in a manner to enable transport of said second sample racks (4') and disable transport of said first sample racks (4) and being associated with at least one controllable main/bypass line switch (18) operable to guide said second sample racks (4') from one main transport line (8, 9) to said bypass transport line (14) or to keep said second sample racks (4') on said main transport line (8, 9).

2. The junction (15) according to claim 1, wherein said one or more bypass transport lines (8, 9) are arranged adjacent to said turntable (6).

3. The junction (15) according to any one of the preceding claims 1 or 2, wherein each bypass transport line (14) interconnects adjacent main transport lines (8, 9).

4. The junction (15) according to any one of the preceding claims 1 to 3, comprising paired main transport lines, wherein each pair (7) is configured for transporting said first and second sample racks (4, 4') in opposite directions.

5. The junction (15) according to claim 4, wherein one or more pairs (7) of said main transport lines (8, 9) respectively are interconnected by at least one interconnection transport line (19), said interconnection transport line (19) being associated with at least one controllable main/main line switch (20) operable to guide said second sample racks (4') from one main transport line (8, 9) to another main transport line (8, 9) of said pair (7) of main transport lines (8, 9) via the interconnection transport line (19) or to keep said first and second sample racks (4, 4') on one main transport line (8, 9).

6. The junction (15) according to claim 5, wherein said bypass and interconnection transport lines (14, 19) form a looped path of travel around said turntable (6).

7. The junction (15) according to any one of the preceding claims 1 to 6, wherein said turntable (6) is provided with one pair (10) of rotatable transport lines (11, 12) configured for transporting said first and second sample racks (4, 4') in opposite directions.

8. An automated transport device (3) for transporting sample racks (4, 4') in an analytical system (1) comprising one or more work cells (2, 2') for processing samples, comprising:
- one or more junctions (15), each of which comprising plural main transport lines (8, 9) for transporting first and second sample racks (4, 4'), wherein said first sample racks (4) have a bigger rack size than said second sample racks (4') with respect to transporting directions of said main transport lines (8, 9); a turntable (6) provided with at least one rotatable transport line (11, 12) for transporting said first and second sample racks (4, 4'), said rotatable transport line (11, 12) being coupled to said main transport lines (8, 9) in a manner to alternately connect said rotatable transport line (11, 12) to said main transport lines (8, 9) and/or to interconnect at least two main transport lines (8, 9); and one or more bypass transport lines (14), each of which interconnecting two main transport lines (8, 9) bypassing said turntable (6) and being curved in a manner to enable transport of said second sample racks (4') and disable transport of said first sample racks (4) and being associated with at least one controllable main/bypass line switch (18) operable to guide said second sample racks (4') from one main transport line (8, 9) to said bypass transport line (14) or to keep said second sample racks (4') on said main transport line (8, 9);
- a controller (21), set up to control transporting said sample racks (4, 4') between two main transport lines (8, 9) of one junction (15) in a manner that
said rotatable transport line (11, 12) is rotated to interconnect said main transport lines (8, 9), wherein said first and second sample racks (4, 4') are transported by said rotatable transport line (11, 12); or
said rotatable transport line (11, 12) is rotated to be alternately connected to said main transport lines (8, 9), wherein said first sample racks (4) are transported by said rotatable transport line (11, 12) and said second sample racks (4') are transported by said bypass transport line (14) interconnecting said main transport lines (8, 9).

9. The transport device (3) according to claim 8, comprising paired main transport lines, each pair (7) being configured for transporting said first and second sample racks (4, 4') in opposite directions, wherein said controller (21) is set up to control transporting said sample racks (4, 4') between one pair (7) of main transport lines (8, 9) by rotating said at least one rotatable transport line (11, 12) and transporting said sample racks (4, 4') by said rotatable transport line (11, 12).

10. The transport device (3) according to claim 9, wherein one or more pairs (7) of said main transport lines (8, 9) respectively are interconnected by at least one interconnection transport line (19), said interconnection transport line (19) being associated with at least one controllable main/main line switch (20) operable to guide said second sample racks (4') from one main transport line (8, 9) to another main transport line (8, 9) of said pair (7) of main transport lines (8, 9) via said interconnection transport line (19) or to keep said first and second sample racks (4, 4') on one main transport line (8, 9), wherein said controller (21) is set up to control transporting said second sample racks (4') between said main transport lines (8, 9) of one pair (7) of main transport lines (8, 9) by transporting said second sample racks (4') by said interconnection transport line (19) .

11. The transport device (3) according to any one of the preceding claims 8 to 10, wherein one or more of said switches (18, 20) respectively are operatively coupled to a rack size sensor configured for sensing said rack sizes, and wherein said controller (21) is set up to control transporting said first and second sample racks (4, 4') in a manner that said rack size is determined by said rack size sensor to obtain rack size-specific sensor signals and said switches (18, 20) are operated based on said rack-size specific sensor signals.

12. An analytical system (1), comprising:
- one or more work cells (2, 2') for processing samples;
- an automated transport device (3) for transporting sample racks (4, 4') between said work cells (2, 2'), comprising:
one or more junctions (15), each of which comprising plural main transport lines (8, 9) for transporting first and second sample racks (4, 4'), wherein said first sample racks (4) have a bigger rack size than said second sample racks (4') with respect to transporting directions of said main transport lines (8, 9); a turntable (6) provided with at least one rotatable transport line (11, 12) for transporting said first and second sample racks (4, 4'), said rotatable transport line (11, 12) being coupled to said main transport lines (8, 9) in a manner to alternately connect said rotatable transport line (11, 12) to said main transport lines (8, 9) and/or to interconnect at least two main transport lines (8, 9); and one or more bypass transport lines (14), each of which interconnecting two main transport lines (8, 9) bypassing said turntable (6) and being curved in a manner to enable transport of said second sample racks (4') and disable transport of said first sample racks (4), and being associated with at least one controllable main/bypass line switch (18) operable to guide said second sample racks (4') from one main transport line (8, 9) to said bypass transport line (14) or to keep said second sample racks (4') on said main transport line (8, 9);
a controller (21), set up to control transporting said sample racks (4, 4') between two main transport lines (8, 9) of one junction (15) in a manner that
said rotatable transport line (11, 12) is rotated to interconnect said main transport lines (8, 9), wherein said first and second sample racks (4, 4') are transported by said rotatable transport line (11, 12); or
said rotatable transport line (11, 12) is rotated to be alternately connected to said main transport lines (8, 9), wherein said first sample racks (4) are transported by said rotatable transport line (11, 12) and said second sample racks (4') are transported by said bypass transport line (14) interconnecting said main transport lines (8, 9).

13. The system (1) according to claim 12, wherein said work cells (2, 2') comprise first and/or second work cells (2, 2'), each of said first work cells (2) being associated with one auxiliary transport line (23) connected to one main transport line (8, 9) for processing samples transported by said auxiliary transport line (23), each of said second work cells (2') being associated with at least one main transport line (8, 9) for processing samples transported by said main transport line (8, 9).

14. A process for transporting first and second sample racks (4, 4') in an automated analytical system (1) comprising one or more work cells (2, 2') for processing samples, said first sample racks (4) having a bigger rack size than said second sample racks (4') with respect to a transporting direction, comprising the following steps of:
transporting said first sample racks (4) from one main transport line (8, 9) to another main transport line (8, 9) by rotating at least one rotatable transport line (11, 12) in a manner to alternately connect it to said main transport lines (8, 9) ;
transporting said second sample racks (4') from said one main transport line (8, 9) to said another main transport line (8, 9) by means of a bypass transport line (14), said bypass transport line (14) interconnecting said main transport lines (8, 9) bypassing said rotatable transport line (11, 12) and being curved in a manner to enable transport of said second sample racks (4') and disable transport of said first sample racks (4).

15. The process according to claim 14, wherein said first and second sample racks (4, 4') are transported from one main line (8, 9) to another main line (8, 9), said main lines (8, 9) being configured for transporting said sample racks (4, 4') in opposite directions, by rotating said at least one rotatable transport line (11, 12) and transporting said sample racks (4, 4') by said rotatable transport line (11, 12).

## Patentansprüche

1. Kreuzung (15) zum Transportieren von Probenträgern (4, 4') in einem Analysesystem (1), das eine oder mehrere Arbeitszellen (2, 2') zum Aufbereiten von Proben umfasst, umfassend:
- eine Vielzahl von Haupttransportlinien (8, 9) zum Transportieren erster und zweiter Probenträger (4, 4'), wobei die ersten Probenträger (4) in Bezug auf die Transportrichtungen der Haupttransportlinien (8, 9) eine größere Trägergröße als die zweiten Probenträger (4') aufweisen,
- eine Drehscheibe (6), die mit wenigstens einer drehbaren Transportlinie (11, 12) zum Transportieren der ersten und zweiten Probenträger (4, 4') versehen ist, wobei die drehbare Transportlinie (11, 12) mit den Haupttransportlinien (8, 9) auf eine solche Weise gekoppelt ist, dass die drehbare Transportlinie (11, 12) abwechselnd mit den Haupttransportlinien (8, 9) verbunden wird und/oder wenigstens zwei Haupttransportlinien (8, 9) zusammengeschaltet werden,
- eine oder mehrere Umgehungstransportlinien (14), die jeweils zwei Haupttransportlinien (8, 9), die die Drehscheibe (6) umgehen, zusammenschalten und auf eine solche Weise gekrümmt sind, dass sie einen Transport der zweiten Probenträger (4') ermöglichen und einen Transport der ersten Probenträger (4) sperren, und die mit wenigstens einem steuerbaren Haupt-/Umgehungslinienschalter (18) zusammenwirken, der in der Lage ist, die zweiten Probenträger (4') von einer Haupttransportlinie (8, 9) zu der Umgehungstransportlinie (14) zu führen oder die zweiten Probenträger (4') auf der Haupttransportlinie (8, 9) zu halten.

2. Kreuzung (15) nach Anspruch 1, wobei die eine oder die mehreren Umgehungstransportlinien (8, 9) angrenzend an die Drehscheibe (6) angeordnet sind.

3. Kreuzung (15) nach einem der vorhergehenden Ansprüche 1 oder 2, wobei jede Umgehungstransportlinie (14) angrenzende Haupttransportlinien (8, 9) zusammenschaltet.

4. Kreuzung (15) nach einem der vorhergehenden Ansprüche 1 bis 3, umfassend gepaarte Haupttransportlinien, wobei jedes Paar (7) dazu ausgelegt ist, die ersten und zweiten Probenträger (4, 4') in entgegengesetzten Richtungen zu transportieren.

5. Kreuzung (15) nach Anspruch 4, wobei ein oder mehrere Paare (7) der Haupttransportlinien (8, 9) jeweils durch wenigstens eine Zusammenschaltungstransportlinie (19) zusammengeschaltet werden, wobei die Zusammenschaltungstransportlinie (19) mit wenigstens einem steuerbaren Haupt-/Hauptlinienschalter (20) zusammenwirkt, der in der Lage ist, die zweiten Probenträger (4') von einer Haupttransportlinie (8, 9) zu einer anderen Haupttransportlinie (8, 9) des Paars (7) von Haupttransportlinien (8, 9) über die Zusammenschaltungstransportlinie (19) zu führen oder die ersten und zweiten Probenträger (4, 4') auf einer Haupttransportlinie (8, 9) zu halten.

6. Kreuzung (15) nach Anspruch 5, wobei die Umgehungs- und Zusammenschaltungstransportlinien (14, 19) einen schleifenförmigen Fahrweg um die Drehscheibe (6) bilden.

7. Kreuzung (15) nach einem der vorhergehenden Ansprüche 1 bis 6, wobei die Drehscheibe (6) mit einem Paar (10) von drehbaren Transportlinien (11, 12) versehen ist, die dazu ausgelegt sind, die ersten und zweiten Probenträger (4, 4') in entgegengesetzten Richtungen zu transportieren.

8. Automatisierte Transportvorrichtung (3) zum Transportieren von Probenträgern (4, 4') in einem Analysesystem (1), das eine oder mehrere Arbeitszellen (2, 2') zum Aufbereiten von Proben umfasst, umfassend:
- eine oder mehrere Kreuzungen (15), die jeweils eine Vielzahl von Haupttransportlinien (8, 9) zum Transportieren erster und zweiter Probenträger (4, 4') umfassen, wobei die ersten Probenträger (4) in Bezug auf die Transportrichtungen der Haupttransportlinien (8, 9) eine größere Trägergröße als die zweiten Probenträger (4') aufweisen, eine Drehscheibe (6), die mit wenigstens einer drehbaren Transportlinie (11, 12) zum Transportieren der ersten und zweiten Probenträger (4, 4') versehen ist, wobei die drehbare Transportlinie (11, 12) mit den Haupttransportlinien (8, 9) auf eine solche Weise gekoppelt ist, dass die drehbare Transportlinie (11, 12) abwechselnd mit den Haupttransportlinien (8, 9) verbunden wird und/oder wenigstens zwei Haupttransportlinien (8, 9) zusammengeschaltet werden, und eine oder mehrere Umgehungstransportlinien (14), die jeweils zwei Haupttransportlinien (8, 9), die die Drehscheibe (6) umgehen, zusammenschalten und auf eine solche Weise gekrümmt sind, dass sie einen Transport der zweiten Probenträger (4') ermöglichen und einen Transport der ersten Probenträger (4) sperren, und die mit wenigstens einem steuerbaren Haupt-/Umgehungslinienschalter (18) zusammenwirken, der in der Lage ist, die zweiten Probenträger (4') von einer Haupttransportlinie (8, 9) zu der Umgehungstransportlinie (14) zu führen oder die zweiten Probenträger (4') auf der Haupttransportlinie (8, 9) zu halten,
eine Steuerung (21), die so aufgebaut ist, dass sie den Transport der Probenträger (4, 4') zwischen zwei Haupttransportlinien (8, 9) einer Kreuzung (15) auf eine solche Weise steuert, dass
die drehbare Transportlinie (11, 12) so gedreht wird, dass sie zwei Haupttransportlinien (8, 9) zusammenschaltet, wobei die ersten und zweiten Probenträger (4, 4') von der drehbaren Transportlinie (11, 12) transportiert werden, oder
die drehbare Transportlinie (11, 12) so gedreht wird, dass sie abwechselnd mit den Haupttransportlinien (8, 9) verbunden wird, wobei die ersten Probenträger (4) von der drehbaren Transportlinie (11, 12) transportiert werden und die zweiten Probenträger (4') von der die Haupttransportlinien (8, 9) zusammenschaltenden Umgehungstransportlinie (14) transportiert werden.

9. Transportvorrichtung (3) nach Anspruch 8, umfassend gepaarte Transportlinien, wobei jedes Paar (7) dazu ausgelegt ist, die ersten und zweiten Probenträger (4, 4') in entgegengesetzten Richtungen zu transportieren, wobei die Steuerung (21) so aufgebaut ist, dass sie einen Transport der Probenträger (4, 4') zwischen einem Paar (7) von Haupttransportlinien (8, 9) steuert, indem sie wenigstens eine drehbare Transportlinie (11, 12) dreht und die Probenträger (4, 4') durch die drehbare Transportlinie (11, 12) transportiert.

10. Transportvorrichtung (3) nach Anspruch 9, wobei ein oder mehrere Paare (7) der Haupttransportlinien (8, 9) jeweils durch wenigstens eine Zusammenschaltungstransportlinie (19) zusammengeschaltet werden, wobei die Zusammenschaltungstransportlinie (19) mit wenigstens einem steuerbaren Haupt-/Hauptlinienschalter (20) zusammenwirkt, der in der Lage ist, die zweiten Probenträger (4') von einer Haupttransportlinie (8, 9) zu einer anderen Haupttransportlinie (8, 9) des Paars (7) von Haupttransportlinien (8, 9) über die Zusammenschaltungstransportlinie (19) zu führen oder die ersten und zweiten Probenträger (4, 4') auf einer Haupttransportlinie (8, 9) zu halten, wobei die Steuerung (21) so aufgebaut ist, dass sie einen Transport der zweiten Probenträger (4') zwischen den Haupttransportlinien (8, 9) eines Paars (7) von Haupttransportlinien (8, 9) steuert, indem sie die zweiten Probenträger (4') durch die Zusammenschaltungstransportlinie (19) transportiert.

11. Transportvorrichtung (3) nach einem der vorhergehenden Ansprüche 8 bis 10, wobei einer oder mehrere der Schalter (18, 20) jeweils mit einem Trägergrößensensor wirkgekoppelt sind, der dazu ausgelegt ist, die Trägergrößen zu erfassen, und wobei die Steuerung (21) so aufgebaut ist, dass sie einen Transport der ersten und zweiten Probenträger (4, 4') auf eine solche Weise steuert, dass die Trägergröße durch den Trägergrößensensor bestimmt wird, um trägergrößenspezifische Sensorsignale zu erhalten, und die Schalter (18, 20) auf Grundlage der trägergrößenspezifischen Sensorsignale betrieben werden.

12. Analysesystem (1), umfassend:
- eine oder mehrere Arbeitszellen (2, 2') zum Aufbereiten von Proben,
- eine automatisierte Transportvorrichtung (3) zum Transportieren von Probenträgern (4, 4') zwischen den Arbeitszellen (2, 2'), umfassend:
eine oder mehrere Kreuzungen (15), die jeweils eine Vielzahl von Haupttransportlinien (8, 9) zum Transportieren erster und zweiter Probenträger (4, 4') umfassen, wobei die ersten Probenträger (4) in Bezug auf die Transportrichtungen der Haupttransportlinien (8, 9) eine größere Trägergröße als die zweiten Probenträger (4') aufweisen, eine Drehscheibe (6), die mit wenigstens einer drehbaren Transportlinie (11, 12) zum Transportieren der ersten und zweiten Probenträger (4, 4') versehen ist, wobei die drehbare Transportlinie (11, 12) mit den Haupttransportlinien (8, 9) auf eine solche Weise gekoppelt ist, dass die drehbare Transportlinie (11, 12) abwechselnd mit den Haupttransportlinien (8, 9) verbunden wird und/oder wenigstens zwei Haupttransportlinien (8, 9) zusammengeschaltet werden, und eine oder mehrere Umgehungstransportlinien (14), die jeweils zwei Haupttransportlinien (8, 9), die die Drehscheibe (6) umgehen, zusammenschalten und auf eine solche Weise gekrümmt sind, dass sie einen Transport der zweiten Probenträger (4') ermöglichen und einen Transport der ersten Probenträger (4) sperren, und die mit wenigstens einem steuerbaren Haupt-/Umgehungslinienschalter (18) zusammenwirken, der in der Lage ist, die zweiten Probenträger (4') von einer Haupttransportlinie (8, 9) zu der Umgehungstransportlinie (14) zu führen oder die zweiten Probenträger (4') auf der Haupttransportlinie (8, 9) zu halten,
eine Steuerung (21), die so aufgebaut ist, dass sie einen Transport der Probenträger (4, 4') zwischen zwei Haupttransportlinien (8, 9) einer Kreuzung (15) auf eine solche Weise steuert, dass
die drehbare Transportlinie (11, 12) so gedreht wird, dass sie die Haupttransportlinien (8, 9) zusammenschaltet, wobei die ersten und zweiten Probenträger (4, 4') von der drehbaren Transportlinie (11, 12) transportiert werden, oder
die drehbare Transportlinie (11, 12) so gedreht wird, dass sie abwechselnd mit den Haupttransportlinien (8, 9) verbunden wird, wobei die ersten Probenträger (4) von der drehbaren Transportlinie (11, 12) transportiert werden und die zweiten Probenträger (4') von der die Haupttransportlinien (8, 9) zusammenschaltenden Umgehungstransportlinie (14) transportiert werden.

13. System (1) nach Anspruch 12, wobei die Arbeitszellen (2, 2') erste und/oder zweite Arbeitszellen (2, 2') umfassen, wobei jede der ersten Arbeitszellen (2) mit einer Hilfstransportlinie (23), die mit einer Haupttransportlinie (8, 9) verbunden ist, zusammenwirkt, um Proben, die von der Hilfstransportlinie (23) transportiert werden, aufzubereiten, wobei jede der zweiten Arbeitszellen (2') mit wenigstens einer Haupttransportlinie (8, 9) zusammenwirkt, um Proben, die von der Haupttransportlinie (8, 9) transportiert werden, zu verarbeiten.

14. Verfahren zum Transportieren erster und zweiter Probenträger (4, 4') in einem automatisierten Analysesystem (1), umfassend eine oder mehrere Arbeitszellen (2, 2') zum Aufbereiten von Proben, wobei die ersten Probenträger (4) in Bezug auf eine Transportrichtung eine größere Trägergröße als die zweiten Probenträger (4') aufweisen, umfassend die folgenden Schritte:
Transportieren der ersten Probenträger (4) von einer Haupttransportlinie (8, 9) zu einer anderen Haupttransportlinie (8, 9), indem wenigstens eine drehbare Transportlinie (11, 12) auf eine solche Weise gedreht wird, dass sie abwechselnd mit den Haupttransportlinien (8, 9) verbunden wird,
Transportieren der zweiten Probenträger (4') von der einen Haupttransportlinie (8, 9) zu der anderen Haupttransportlinie (8, 9) mit Hilfe einer Umgehungstransportlinie (14), wobei die Umgehungstransportlinie (14) die Haupttransportlinien (8, 9), die die drehbare Transportlinie (11, 12) umgehen, zusammenschaltet und auf eine solche Weise gekrümmt ist, dass sie einen Transport der zweiten Probenträger (4') ermöglicht und einen Transport der ersten Probenträger (4) sperrt.

15. Verfahren nach Anspruch 14, wobei die ersten und zweiten Probenträger (4, 4') von einer Hauptlinie (8, 9) zu einer anderen Hauptlinie (8, 9) transportiert werden, wobei die Hauptlinien (8, 9) dazu ausgelegt sind, die Probenträger (4, 4') in entgegengesetzten Richtungen zu transportieren, indem die wenigstens eine drehbare Transportlinie (11, 12) gedreht wird und die Probenträger (4, 4') durch die drehbare Transportlinie (11, 12) transportiert werden.

## Revendications

1. Jonction (15) pour transporter des portoirs d'échantillons (4, 4') dans un système analytique (1) comprenant une ou plusieurs cellule(s) de travail (2, 2') pour traiter des échantillons, comprenant:
- plusieurs lignes de transport principales (8, 9) pour transporter des premiers et seconds portoirs d'échantillons (4, 4'), dans laquelle lesdits premiers portoirs d'échantillons (4) présentent une plus grande taille de portoir que lesdits seconds portoirs d'échantillons (4') par rapport à des directions de transport desdites lignes de transport principales (8, 9);
- un plateau tournant (6) pourvu d'au moins une ligne de transport rotative (11, 12) pour transporter lesdits premiers et seconds portoirs d'échantillons (4, 4'), ladite ligne de transport rotative (11, 12) étant couplée auxdites lignes de transport principales (8, 9) de manière à connecter alternativement ladite ligne de transport rotative (11, 12) auxdites lignes de transport principales (8, 9) et/ou à interconnecter au moins deux lignes de transport principales (8, 9);
- une ou plusieurs ligne(s) de transport de dérivation (14), dont chacune interconnecte deux lignes de transport principales (8, 9), contourne ledit plateau tournant (6) et est courbe de manière à autoriser le transport desdits seconds portoirs d'échantillons (4') et à interdire le transport desdits premiers portoirs d'échantillons (4), et est associée à au moins un commutateur de ligne principale/de dérivation commandable (18) actionnable pour guider lesdits seconds portoirs d'échantillons (4') à partir d'une ligne de transport principale (8, 9) jusqu'à ladite ligne de transport de dérivation (14) ou pour maintenir lesdits seconds portoirs d'échantillons (4') sur ladite ligne de transport principale (8, 9).

2. Jonction (15) selon la revendication 1, dans laquelle ladite/lesdites une ou plusieurs ligne(s) de transport de dérivation (8, 9) est (sont) agencée(s) à proximité dudit plateau tournant (6).

3. Jonction (15) selon l'une quelconque des revendications précédentes 1 ou 2, dans laquelle chaque ligne de transport de dérivation (14) interconnecte des lignes de transport principales adjacentes (8, 9).

4. Jonction (15) selon l'une quelconque des revendications précédentes 1 à 3, comprenant des lignes de transport principales appariées, dans laquelle chaque paire (7) est configurée de manière à transporter lesdits premiers et seconds portoirs d'échantillons (4, 4') dans des directions opposées.

5. Jonction (15) selon la revendication 4, dans laquelle une ou plusieurs paire(s) (7) desdites lignes de transport principales (8, 9) est (sont) respectivement interconnectée(s) par au moins une ligne de transport d'interconnexion (19), ladite ligne de transport d'interconnexion (19) étant associée à au moins un commutateur de ligne principale/principale commandable (20) actionnable pour guider lesdites seconds portoirs d'échantillons (4') à partir d'une première ligne de transport principale (8, 9) jusqu'à une autre ligne de transport principale (8, 9) de ladite paire (7) de lignes de transport principales (8, 9) par l'intermédiaire de la ligne de transport d'interconnexion (19) ou pour maintenir lesdits premiers et seconds portoirs d'échantillons (4, 4') sur une ligne de transport principale (8, 9).

6. Jonction (15) selon la revendication 5, dans laquelle lesdites lignes de transport de dérivation et d'interconnexion (14, 19) forment un chemin de déplacement en boucle autour dudit plateau tournant (6).

7. Jonction (15) selon l'une quelconque des revendications précédentes 1 à 6, dans laquelle ledit plateau tournant (6) est pourvu d'une paire (10) de lignes de transport rotatives (11, 12) configurées de manière à transporter lesdits premiers et seconds portoirs d'échantillons (4, 4') dans des directions opposées.

8. Dispositif de transport automatisé (3) pour transporter des portoirs d'échantillons (4, 4') dans un système analytique (1) comprenant une ou plusieurs cellule(s) de travail (2, 2') pour traiter des échantillons, comprenant:
- une ou plusieurs jonction(s) (15), dont chacune comprend plusieurs lignes de transport principales (8, 9) pour transporter des premiers et seconds portoirs d'échantillons (4, 4'), dans lequel lesdits premiers portoirs d'échantillons (4) présentent une plus grande taille de portoir que lesdits seconds portoirs d'échantillons (4') par rapport à des directions de transport desdites lignes de transport principales (8, 9); un plateau tournant (6) pourvu d'au moins une ligne de transport rotative (11, 12) pour transporter lesdits premiers et seconds portoirs d'échantillons (4, 4'), ladite ligne de transport rotative (11, 12) étant couplée auxdites lignes de transport principales (8, 9) de manière à connecter alternativement ladite ligne de transport rotative (11, 12) auxdites lignes de transport principales (8, 9) et/ou à interconnecter au moins deux lignes de transport principales (8, 9); et une ou plusieurs ligne(s) de transport de dérivation (14), dont chacune interconnecte deux lignes de transport principales (8, 9), contourne ledit plateau tournant (6) et est courbe de manière à autoriser le transport desdits seconds portoirs d'échantillons (4') et à interdire le transport desdits premiers portoirs d'échantillons (4), et est associée à au moins un commutateur de ligne principale/de dérivation commandable (18) actionnable pour guider lesdits seconds portoirs d'échantillons (4') à partir d'une ligne de transport principale (8, 9) jusqu'à ladite ligne de transport de dérivation (14) ou pour maintenir lesdits seconds portoirs d'échantillons (4') sur ladite ligne de transport principale (8, 9);
- un dispositif de commande (21), réglé pour commander le transport desdits portoirs d'échantillons (4, 4') entre deux lignes de transport principales (8, 9) d'une jonction (15) de telle manière que ladite ligne de transport rotative (11, 12) soit mise en rotation pour interconnecter lesdites lignes de transport principales (8, 9), dans lequel lesdits premiers et seconds portoirs d'échantillons (4, 4') sont transportés par ladite ligne de transport rotative (11, 12); ou
ladite ligne de transport rotative (11, 12) est mise en rotation pour être alternativement connectée auxdites lignes de transport principales (8, 9), dans lequel lesdits premiers portoirs d'échantillons (4) sont transportés par ladite ligne de transport rotative (11, 12) et lesdits seconds portoirs d'échantillons (4') sont transportés par ladite ligne de transport de dérivation (14) qui interconnecte lesdites lignes de transport principales (8, 9).

9. Dispositif de transport (3) selon la revendication 8, comprenant des lignes de transport principales appariées, chaque paire (7) étant configurée de manière à transporter lesdits premiers et seconds portoirs d'échantillons (4, 4') dans des directions opposées, dans lequel ledit dispositif de commande (21) est réglé de manière à commander le transport desdits portoirs d'échantillons (4, 4') entre une paire (7) de lignes de transport principales (8, 9) en mettant en rotation ladite au moins une ligne de transport rotative (11, 12) et le transport desdits portoirs d'échantillons (4, 4') par ladite ligne de transport rotative (11, 12).

10. Dispositif de transport (3) selon la revendication 9, dans lequel une ou plusieurs paire(s) (7) desdites lignes de transport principales (8, 9) est (sont) respectivement interconnectée(s) par au moins une ligne de transport d'interconnexion (19), ladite ligne de transport d'interconnexion (19) étant associée à au moins un commutateur de ligne principale/principale commandable (20) actionnable pour guider lesdits seconds portoirs d'échantillons (4') à partir d'une première ligne de transport principale (8, 9) jusqu'à une autre ligne de transport principale (8, 9) de ladite paire (7) de lignes de transport principales (8, 9) par l'intermédiaire de ladite ligne de transport d'interconnexion (19) ou pour maintenir lesdits premiers et seconds portoirs d'échantillons (4, 4') sur une ligne de transport principale (8, 9), dans lequel ledit dispositif de commande (21) est réglé de manière à commander lesdits seconds portoirs d'échantillons (4') entre lesdites lignes de transport principales (8, 9) d'une paire (7) de lignes de transport principales (8, 9) en transportant lesdits seconds portoirs d'échantillons (4') par ladite ligne de transport d'interconnexion (19).

11. Dispositif de transport (3) selon l'une quelconque des revendications précédentes 8 à 10, dans lequel un ou plusieurs desdits commutateurs (18, 20) est (sont) respectivement couplé(s) de façon opérationnelle à un capteur de dimension de portoir configuré de manière à détecter lesdites tailles de portoir, et dans lequel ledit dispositif de commande (21) est réglé de manière à commander le transport desdits premiers et seconds portoirs d'échantillons (4, 4') de telle manière que ladite taille de portoir soit déterminée par ledit capteur de dimension de portoir afin d'obtenir des signaux de capteur spécifiques à la taille de portoir, et lesdits commutateurs (18, 20) sont actionnés sur la base desdits signaux de capteur spécifiques à la taille de portoir.

12. Système analytique (1), comprenant:
- une ou plusieurs cellule(s) de travail (2, 2') pour traiter des échantillons;
- un dispositif de transport automatisé (3) pour transporter des portoirs d'échantillons (4, 4') entre lesdites cellules de travail (2, 2'), comprenant:
une ou plusieurs jonction(s) (15), dont chacune comprend plusieurs lignes de transport principales (8, 9) pour transporter des premiers et seconds portoirs d'échantillons (4, 4'), dans lequel lesdits premiers portoirs d'échantillons (4) présentent une plus grande taille de portoir que lesdits seconds portoirs d'échantillons (4') par rapport à des directions de transport desdites lignes de transport principales (8, 9); un plateau tournant (6) pourvu d'au moins une ligne de transport rotative (11, 12) pour transporter lesdits premiers et seconds portoirs d'échantillons (4, 4'), ladite ligne de transport rotative (11, 12) étant couplée auxdites lignes de transport principales (8, 9) de manière à connecter alternativement ladite ligne de transport rotative (11, 12) auxdites lignes de transport principales (8, 9) et/ou à interconnecter au moins deux lignes de transport principales (8, 9); et une ou plusieurs ligne(s) de transport de dérivation (14), dont chacune interconnecte deux lignes de transport principales (8, 9), contourne ledit plateau tournant (6) et est courbe de manière à autoriser le transport desdits seconds portoirs d'échantillons (4') et à interdire le transport desdits premiers portoirs d'échantillons (4), et est associée à au moins un commutateur de ligne principale/de dérivation commandable (18) actionnable pour guider lesdits seconds portoirs d'échantillons (4') à partir d'une ligne de transport principale (8, 9) jusqu'à ladite ligne de transport de dérivation (14) ou pour maintenir lesdits seconds portoirs d'échantillons (4') sur ladite ligne de transport principale (8, 9);
un dispositif de commande (21), réglé de manière à commander le transport desdits portoirs d'échantillons (4, 4') entre deux lignes de transport principales (8, 9) d'une jonction (15) de telle manière que ladite ligne de transport rotative (11, 12) soit mise en rotation pour interconnecter lesdites lignes de transport principales (8, 9), dans lequel lesdits premiers et seconds portoirs d'échantillons (4, 4') sont transportés par ladite ligne de transport rotative (11, 12); ou que ladite ligne de transport rotative (11, 12) soit mise en rotation afin d'être alternativement connectée auxdites lignes de transport principales (8, 9), dans lequel lesdits premiers portoirs d'échantillons (4) sont transportés par ladite ligne de transport rotative (11, 12) et lesdits seconds portoirs d'échantillons (4') sont transportés par ladite ligne de transport de dérivation (14) qui interconnecte lesdites lignes de transport principales (8, 9).

13. Système (1) selon la revendication 12, dans lequel lesdites cellules de travail (2, 2') comprennent des premières et/ou des secondes cellules de travail (2, 2'), chacune desdites premières cellules de travail (2) étant associée à une ligne de transport auxiliaire (23) connectée à une ligne de transport principale (8, 9) pour traiter des échantillons transportés par ladite ligne de transport auxiliaire (23), chacune desdites secondes cellules de travail (2') étant associée à au moins une ligne de transport principale (8, 9) pour traiter des échantillons transportés par ladite ligne de transport principale (8, 9).

14. Procédé pour transporter des premiers et seconds portoirs d'échantillons (4, 4') dans un système analytique automatisé (1) comprenant une ou plusieurs cellule(s) de travail (2, 2') pour traiter des échantillons, lesdits premiers portoirs d'échantillons (4) présentant une plus grande taille de portoir que lesdits seconds portoirs d'échantillons (4') par rapport à une direction de transport, comprenant les étapes suivantes:
transporter lesdits premiers portoirs d'échantillons (4) à partir d'une première ligne de transport principale (8, 9) jusqu'à une autre ligne de transport principale (8, 9) en mettant en rotation au moins une ligne de transport rotative (11, 12) de manière à connecter alternativement celle-ci auxdites lignes de transport principales (8, 9);
transporter lesdits seconds portoirs d'échantillons (4') à partir de ladite une première ligne de transport principale (8, 9) jusqu'à ladite une autre ligne de transport principale (8, 9) au moyen d'une ligne de transport de dérivation (14), ladite ligne de transport de dérivation (14) interconnectant lesdites lignes de transport principales (8, 9), contournant ladite ligne de transport rotative (11, 12) et étant courbe de manière à autoriser le transport desdits seconds portoirs d'échantillons (4') et à interdire le transport desdits premiers portoirs d'échantillons (4).

15. Procédé selon la revendication 14, dans lequel lesdits premiers et seconds portoirs d'échantillons (4, 4') sont transportés à partir d'une première ligne principale (8, 9) jusqu'à une autre ligne principale (8, 9), lesdites lignes principales (8, 9) étant configurées de manière à transporter lesdits portoirs d'échantillons (4, 4') dans des directions opposées, en mettant en rotation ladite au moins une ligne de transport rotative (11, 12) et en transportant lesdits portoirs d'échantillons (4, 4') par ladite ligne de transport rotative (11, 12).
